# EUROPEAN PATENT SPECIFICATION

(11) **EP 1 742 970 B1**
(45) Date of publication and mention of the grant of the patent: **07.06.2017**
(21) Application number: 05733434.4
(22) Date of filing: 27.04.2005
(51) Int. Cl.: C08J 5/18, A23L 29/212, C08B 30/12

(54) **STARCH TREATMENT PROCESS**
VERFAHREN ZUR BEHANDLUNG VON STÄRKE
PROCEDE DE TRAITEMENT DE L'AMIDON

(30) Priority: 28.04.2004 AU 2004902231
(43) Date of publication of application: 17.01.2007
(73) Proprietor: COMMONWEALTH SCIENTIFIC AND INDUSTRIAL RESEARCH ORGANISATION, Campbell, ACT 2601 (AU)
(72) Inventor: AUGUSTIN, Mary, Ann, Werribee, VIC 3030 (AU); SANGUANSRI, Peerasak, Werribee, VIC 3030 (AU); HTOON, Aung, Werribee, VIC 3030 (AU)
(74) Representative: Gowshall, Jonathan Vallance
(86) International application number: PCT/AU2005/000586
(87) International publication number: WO 2005/105851

(56) References cited:
- WO-A1-03/004535
- US-A- 5 455 342
- US-A- 5 547 513
- US-B1- 6 413 567
- US-B2- 6 613 373
- US-B2- 6 737 099
- PATENT ABSTRACTS OF JAPAN & JP 06 141 820 A (SANWA KOSAN KK) 24 May 1994
- PATENT ABSTRACTS OF JAPAN & JP 10 195 105 A (NIPPON SHOKUHIN KAKO CO LTD) 18 July 1998

## Description

### Starch Treatment Process

This invention relates to the functional modification of starch particularly resistant starch to improve the water binding properties while retaining the resistance of the starch.

### Background to the invention

Starch has a major influence on the properties of food. Its ability to hold moisture, thicken and gel are desirable properties of starch which contribute to texture development making it a valued food ingredient. Some of its other roles are for stabilization of emulsions, coating of food products and encapsulation of food components for protection of sensitive components and target delivery.

Starch is composed of two polymers, amylose, a long chain linear structure and amylopectin, a highly branched high molecular weight polymer. The ratio of amylose to amylopectin varies with starch source. Some starches have been genetically selected so that they do not contain any amylose (eg waxy maize starch). Starch exists as granules and for them to be functional they need to hydrate, swell and be exposed to heat. Cooking without stirring results in swollen granules and the development of viscosity. Shearing or stirring generally causes a rupture of the granules and a decrease in viscosity.

Native starches have limited use in food applications as they have low process tolerance and produce weak bodied pastes. They can be derivatised (eg by reaction of the hydroxy groups with a chemical agent) or modified (eg by acid treatment or application of heat) to make them more useful in food applications. There are a number of chemically modified starches (eg hydroxypropystarch, starch esters such as acetylated and phosphated starch, hydrolysed starch and enzyme treated starch that have been treated with acid or enzymes to reduce average molecular size) that have found their way into a wide range of food applications. Whilst chemical modification can impart desirable characteristics to starch there is a growing interest in the use of physical treatments to modify starch. At present, there are pregelatinised starch that have been pre-pasted and pre-cooked. Whilst they have applications in convenience foods because of their ability to hydrate and build viscosity at low temperatures, they are less viscous than their parent starches.

Food biopolymers may be physically modified by the application of heat, shear and high pressure. High pressure processing of wheat starch at 60 MPa at 25°C for 15 min resulted in altered swelling properties and amylose release from starch granules (Douzals, J.P., Perrier Cornet, J.M., Gervais P. and Coquille J.C. ,1998), High pressure gelatinisation of wheat starch and pressure-induced gels. (J. Agric. Food Chem 46, 4824-4829). Dynamic pulsed pressure (414 or 620 MPa at 70°C) of corn starch and modified corn starch decreased melting temperature but did not change viscosity of starch suspensions (Onwulata, C.I. and Elchediak, E., 2000) Starches and fibers treated by dynamic pulsed pressure. (Food Research International 33, 367-374). Treatment of 10% waxy maize starch dispersions at 450-600 MPa generally increased the apparent viscosity (Stolt, M., Stoforos, N.G., Taoukis, P.S. and Autio, K.,1999) Evaluation and modeling of rheological properties of high pressure treated waxy maize starch dispersions. (Journal of Food Engineering 40, 293-298).

Sonication has been shown to reduce the molecular weight of wheat starch (Seguchi, M., Higasa, T. and Mori, T.,1994) Study of wheat starch structures by sonication treatment. (Cereal Chemistry 71(6) 636-639). Degradation of waxy maize starch was observed after application of ultrasonics. Degradation was accelerated at or above the gelatinisation temperature of starch (Isono, Y., Kumagai, T. and Watanabe, T.,1994) Ultrasonic degradation of waxy rice starch. (Biosci. Biotech. Biochem 58(10) 1799-1802). Sonication of mung bean, potato and rice starches did not change the degree of polymerization but their functional properties were changed through its effects which disrupted the swollen granules rather than breaking bonds within the starch molecule (Chung, K. M., Moon, T.W., Kim, H. and Chun, J.K., 2002) Physiochemical properties of sonicated mung bean, potato and rice starches. (Cereal Chemistry, 79(5) 631-633).

Physical methods of modifying starch properties have been proposed. USA patent 5455342 discloses the pressure treatment of starch and guar gum. USA patent 5945528 discloses the production starch decomposition products having narrow molecular weight distribution using a high pressure homogenizer. USA patent 6048563 discloses the preparation of functionally modified guar products having low viscosity and high fibre using high shear under acid conditions.

USA patent 6689389 discloses a washing and shearing treatment to purify starch and remove proteins and reducing the molecular weight distribution.

Other methods described in the literature include high pressure processing or sonication.

Resistant starch is starch that is not absorbed in the small intestine. They reach the large intestine where they are fermented by colon microflora. They have an important role in human health as nutritional ingredients.

Resistant starches are difficult to process and have poor ingredient functional properties primarily because they have poor water binding properties compared to nonresistant starches.

It is an object of this disclosure to provide a new physical method of varying functional properties of resistant starch in a controlled and predictable manner.

### Brief description of the invention

The present invention, as defined in the claims provides a method of obtaining a resistant starch with improved water binding properties in which a high amylose starch is treated at a temperature above the gelatinization temperature of the starch at a pressure above 400 bar for a time sufficient to produce improved water binding properties while retaining resistance.

The process parameters are controlled to produce desirable functional properties, such as improved gelling, thickening and solubilising properties. Processing conditions can affect the resistant content of starch through their influence on the gelatinisation and retrogradation.

This disclosure is partly predicated on the discovery that application of heating and microfluidisation modifies selected properties such as viscosity, particle size, molecular weight, thermal characteristics of resistant starch. The pressure treatment of the invention as defined in the claims enables the production of desirable properties of starch when used in a range of food and pharmaceutical applications whilst maintaining significant resistant starch content; e g: a viscosity at 50 °C above 10 cPs and a content of resistant starch above 30% by weight on a dry basis.

Food processing technologies such as high pressure homogenisation, microfludisiation, high pressure processing and application of ultrasonics are of interest because of their potential to alter the performance characteristics of biopolymers without resorting to the use of chemicals. The ability to use physical processes in place of other treatments to modify starch performance properties to create novel food ingredients with differentiated properties has several advantages. With the physical processes, there is no requirement for chemicals used in many prior art processes. The physical modification process is a cleaner and greener process. This is an advantage in a society where there is increasing emphasis on keeping the environment clean and reducing the additives that are used in food processing.

The use of microfluidisation for modification of high amylose starch in combination with heating to pre-cook starch granules has not been previously proposed.

In contrast to the prior art pressure treatments, the microfluidisation process utilizes interaction and auxilliary chambers that are designed with defined fixed geometry microchannels to achieve uniform particle and droplet size reduction. It involves dividing a liquid into two microchannels and recombining them in a reaction chamber where the two jets of liquid collide, causing cavitation. The resulting product particle size produced by microfluidisation under the same pressure as homogenization is slightly smaller than the homogenized product and with a tighter particle size distribution.

Another aspect of the present disclosure is predicated on the discovery that application of static high pressure processing or ultrasonication also modifies the physical properties of wet resistant starch whilst maintaining significant resistant starch content after processing.

The method of this invention uses elevated temperatures above the gelatinization temperature of the starch and these temperatures typically range from 60°C to 160°C. The time taken to carry out the treatment is determined by the change in properties desired but typically is from 30 to 90 minutes.

The properties modified depend on the starch type and the heating and microfluidisation parameters. Microfluidisation is the claimed pressure. It produces greater molecular weight changes than obtained by high pressure processing or sonication. The pressure range is preferably from 400 to 1000 bar.

In another aspect the present invention provides a resistant starch with improved water binding properties obtained by treating a high amylose starch at a temperature above the gelatinization temperature of the starch and at a pressure above 400 bar for a time sufficient to produce improved water binding properties while retaining resistance. This treated starch can be used as a wet state ingredient or it may be dried by any conventional drying method including spray drying to form a powder. In both forms the treated starch is useful as a food ingredient with nutritional value as a fat replacement in a variety of foods.

### Detailed description of the invention

### DRAWINGS

Figure 1: Viscosity at 50°C of 10% raw, heated or heated and microfluidised resistant starch suspensions;
Figure 2: Viscosity at 98°C of 10% raw, heated or heated and microfluidised resistant starch suspensions;
Figure 3: Viscosity at 50°C of 10% raw, heated or heated and microfluidised resistant starch suspensions (after temperature cycling - cooling to 50°C, heated to 98°C then cooled to 50°C);
Figure 4: Chain length reduction of Hi Maize 1043 by microfluidisation;
Figure 5: Chain length reduction of Hylon VII by microfluidisation;
Figure 6: Chain length reduction of Novelose 260 by microfluidisation;
Figure 7: Chain length reduction of potato starch by microfluidisation;
Figure 8: Chain length reduction of Novelose 330 by microfluidisation;
Figure 9: Chain length reduction of Hylon VII by various processing methods;
Figure 10: Chain length reduction of wheat starch by microfluidisation.
Figure 11: Solid state ¹³C CPMAS (cross-polarised magic angle spinning) NMR spectra

### PROCESSING TREATMENTS FOR MODIFICATION OF STARCH PROPERTIES

### Application of Microfludisation

As a preliminary microfluidisation trial showed that heat treatment of starch suspensions at 90°C for 30-60 min prior to microfluidisation caused little change in viscosity in all resistant starches used except for potato starch, the starches were heated at higher temperatures (121°C for 60 min) in subsequent experiments prior to microfluidisation. This was to ensure that there was gelatinisation of the starch prior to microfluidisation.

Unless otherwise stated, a 20 % suspension (wt ingredient/wt total) of each starch was made with 70°C deionised water, packaged into 73 x 82 mm cans and thermally processed at 121°C for 60 minutes to ensure that complete gelatinisation has occurred. Potato starch was made to 10% (wt ingredient/wt total) suspension before thermal processing. This was because potato starch onset temperature was measured at 62.64°C and the products starts to thicken when added to 70°C water. Wheat, corn and waxy maize starch also thickened similarly to potato starch and were made up to 10% (wt ingredient/wt total).

The samples were heated to 60°C and diluted to 10% (with the exception of potato, wheat, corn and maize starches which were already at 10% wt ingredient/wt total) prior to microfluidisation at 400 or 800 bar using the pilot scale microfluidiser M210-EH-B (MFIC, Newton MA, USA) with a combination of 425 µm Q50Z auxiliary processing module and 200 µm E230Z interaction chamber (for dispersion and cell disruption). Either 1 or 3 passes through the microfluidiser was used.

### Application of Ultrasonication or Static High Pressure Processing

Hylon VII was made up to 20% solids (wt starch ingredient/ total wt suspension) by direct dispersion in 70°C water and processed in 73 x 82 mm cans at 121°C for 60 minutes. The samples are then made up to 10% solids at 60°C and processed as follows:
Ultrasound treatment at 50 mL/min @ 380 watts using the lab ultrasonic processor - Hielscher UP400S (Innovative Ultrasonics, Australia).
High pressure processing at 6,000 bars for 15 minutes using the high pressure processing unit - QFP 35L (Avure, USA).

### CHARACTERISATION OF STARCH PROPERTIES

### Viscosity

The viscosity of starch was measured using a Paar Physica MCR300 rheometer (Paar Scientific) fitted with a C-CC 27/T200 cup and B-CC 27/Q1 bob attachment. The instrument was programmed to run at 100 rpm, heating the product to 98°C in 10 minutes, hold at 98°C for 30 minutes and cooling down to 50°C in 10 minutes and holding at this temperature for 3 min. The change in shear force acting on the bob attachment was measured as a viscosity unit (cP).

For ease of comparison between various starches and effects of processing, the viscosity at 50 and 98°C were used as indicators of changes in rheological properties as they give information about the behaviour of starches at mild and cooking temperatures. Starch solutions used were liquid raw starch and pre-processed wet starch suspensions.

### Particle size analysis

The Galai CIS-1 (Particle and Surface Sciences Pty Ltd), where measurement is based on time of transition theory, was used to determine particle size distribution of reconstituted Hylon VII, wheat, corn and waxy maize starch samples. Samples were dispersed in water and transferred into a sample cuvette with a miniature magnetic stirrer then loaded into the Galai CIS-1 for particle size measurement.

### Resistant starch analysis

The content of resistant starch of powdered starch was measured using the Megazyme Resistant Starch Assay Procedure (RSTAR 11/02, AOAC Method 2002.02; AACC Method 32-40). Duplicate analyses were performed on each sample. Samples are incubated in a shaking water bath with pancreatic a-amylase and amyloglucosidase (AMG) for 16 hr at 37°C, during which time non-resistant starch is solubilised and hydrolyzed to glucose by the combined action of the two enzymes. The reaction is terminated by the addition of an equal volume of ethanol or industrial methylated spirits (IMS, denatured ethanol), and the RS is recovered as a pellet on centrifugation. This is then washed twice by suspension in aqueous IMS or ethanol (50%, v/v), followed by centrifugation.

Free liquid is removed by decantation. RS in the pellet is dissolved in 2M KOH by vigorously stirring in an ice-water bath over a magnetic stirrer. This solution is neutralized with acetate buffer and the starch is quantitatively hydrolyzed to glucose with AMG. Glucose is measured with glucose oxidase/peroxidase reagent (GOPOD), and this is a measure of the RS content of the sample. Non-resistant starch (solubilised starch) can be determined by pooling the original supernatant and the washings, adjusting the volume to 100mL and measuring glucose content with GOPOD.

### Fourier transform infra-red (FTIR)

In this study FTIR technique was used to characterise the changes in starch powders. The structural information identified from the FTIR was used to estimate the reactive aldehyde groups of the starch ingredients. The molecular weights of pre-processed starches were estimated from the FTIR absorbances collected from the microfluidised samples dispersed in a KBr matrix and for the raw starches diffuse reflectance absorbance readings were used.

Dextran standards (Dextran 10, 40, 150 and 500) were from Pharmacia, Uppsala, Sweden. A 4 mg of standard or sample was dispersed in 315mg of KBr and grounded in an agate mortar and pestle. All powders were dried in a desiccator over silica gel under vacuum overnight prior to analysis. The KBr disc was prepared using 8 tons cm-2 pressure for 2 minutes. Duplicate discs were prepared for each sample and standard.

FTIR spectra were recorded using Nicolet model 360 spectrophotometer (Madison, WI) equipped with an OMNIC EPS software. The sample holder was used for the background spectra without KBr, and 32 scans were taken from each sample from 4000-500 cm-1 at a resolution of 4 cm-1.

Single beam spectra of the samples were obtained, and corrected against the background spectrum for the sample holder, to present the spectra in absorbance units. The corrected peak height absorbance measurements were obtained by the tangent method available to the OMNIC EPS software.

The infrared spectra of starches were investigated in two main regions. The lone hydrogen attached directly to the aldehyde carbonyl group was at 2929 cm⁻¹ and the aldehyde carbonyl absorption was at 1647 cm^{-1.} It is anticipated that the peak height absorbances of C-H and C=O stretching vibrations increases with decreasing molecular weight of starches. The corrected peak height absorbances were plotted against molecular weight of dextran standards.

### Example 1: Characteristics of Microfluidised Resistant Starches

### Viscosity

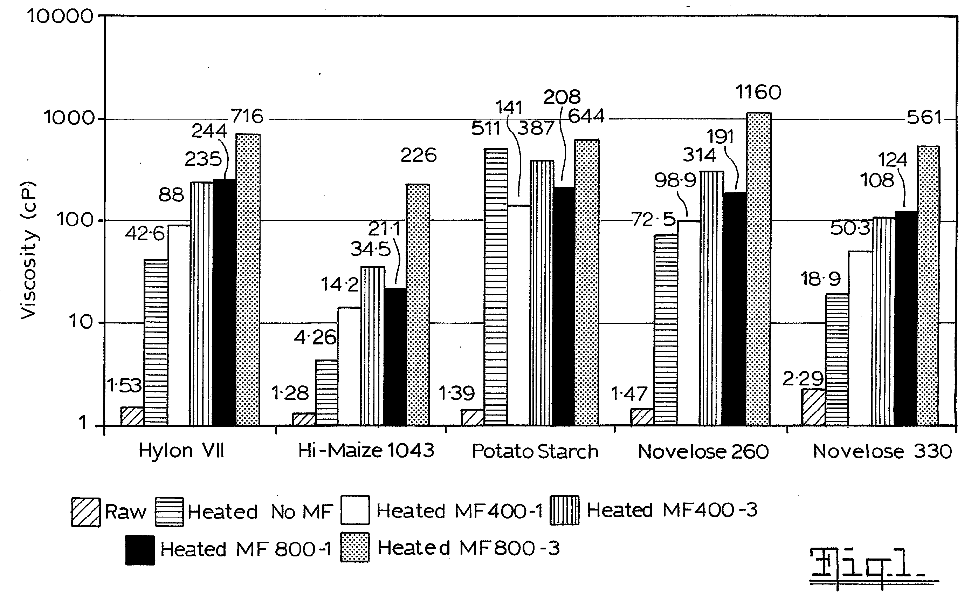

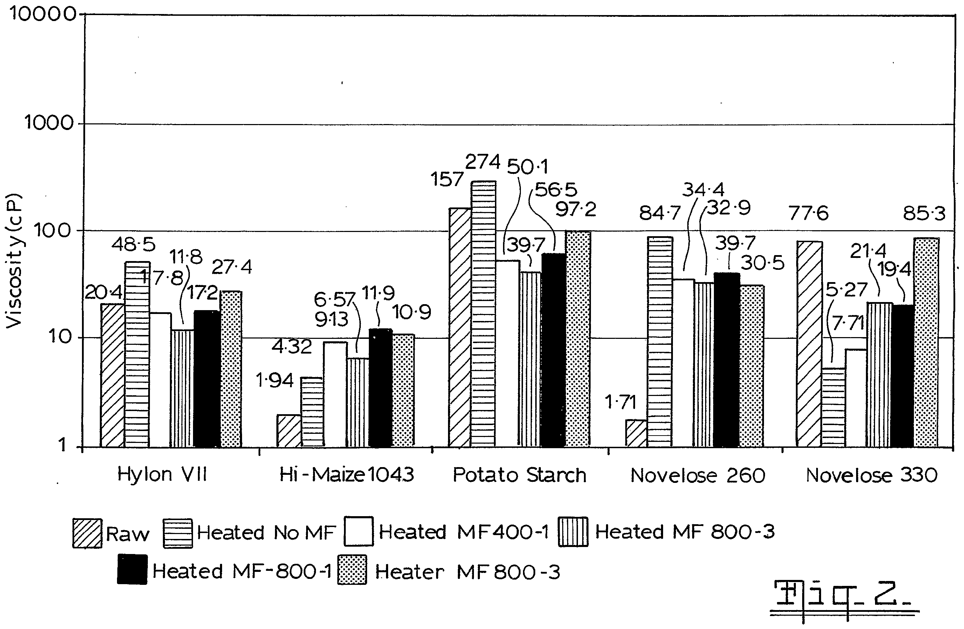

Figures 1 and 2 illustrate the effect of microfluidisation on the viscosity of wet starch properties.

As expected the viscosities of all raw resistant starches were low (1.3-2.3 cP). Heat treatment (121 °C /60 min) increased viscosity of starch suspensions as expected because as the temperature is raised, there is swelling and gelatinsation of the starch granules with a concomitant increase in viscosity. The combined use of heat treatment and microfludisation markedly altered the viscosity of all processed resistant starch suspensions.

### Processed Starch Suspension

The viscosities of these suspensions are given in Figures 1 and 2 . In this case the resistant starches were tested after they have been pre-processed (ie heated at 121°C/ microfluidised) and are still in the liquid state (10% wt ingredient/ wt total suspension).

### Viscosity at 50°C after the treatment process

The viscosity at 50°C of all pre-processed resistant starches was increased on heating compared to that of the initial raw starch (Figure 1). Of all starches examined, potato starch had the highest viscosity on heating (511 cPs) whereas the viscosity of the other resistant starches ranged from 4-72cPs. The viscosity at 50°C of heated & microfluidised starch was dependent on the type of starch, the number of passes and the pressure. It was noted that the viscosity of heated starch microfluidised at 800 bars with 1 pass was generally similar to or less than those of corresponding heated starches microfluidised at 400 bar with 3 passes. From a practical viewpoint, microfluidisation at 800 bar with 1 pass is preferred to microfluidisation at 400bar with 3 passes if similar viscosity is desired. The application of microfluidisation to the heated resistant starches (Hylon VII, Hi-Maize, Novelose 260, Novelose 330) increased viscosity at 50°C (Start) and the viscosity increased as microfluidisation pressure was increased. The viscosity of heated microfluidised starches were between 88-717 cPs for Hylon VII, 14-226 cPs for Hi-Maize, 73-1160 cPs for Novelose 260 and 19-561 cPs for Novelose 330). The increase in viscosity obtained on microfluidisation of heated starch ranged from 10 to 1088 cPs. These increases in viscosity represent significant changes in starch properties. The effect of microfludisation on potato starch viscosity was complex.

### Viscosity at 98°C (after cooling to 50°C post the treatment process and then heating to 98°C)

At 98°C the viscosity of raw and processed starches ranged from 12 - 49 cP for Hylon VII, 2-12 cPs for Hi Maize 1043, 40 -274 cPs for potato starch 2- 85 for Novelose 260 and 5-85 for Novelose 330 (Figure 2). Results showed that Novelose 260 and Hi-Maize 1043 were thermo-stable and shear resistant to at least 98°C and 100 rpm in the rheometer, whereas, other starches are not.

There was a trend of decreasing viscosity of at 98°C (Figure 2) obtained on microfluidisation of potato starch compared to that of the raw or heated starch. The trend of decreasing viscosity at 98°C for microfluidised starch (400 bar/3 passes compared to 400 bar/1 pass) was evident for all RS2 starches (ie Hylon VII, Hi-Maize 1043 and Novelose 260). However, the trend of decreasing viscosity at 98°C (Figure 2) for microfluidised heated Novelose 260 or Hylon VII was opposite to that observed for viscosity at 50°C (Figure 1) where microfluidisation caused increased viscosity.

### Viscosity at 50°C (after treatment process and temperature cycling - cooling to 50°C, heating to 98°C then cooling to 50°C)

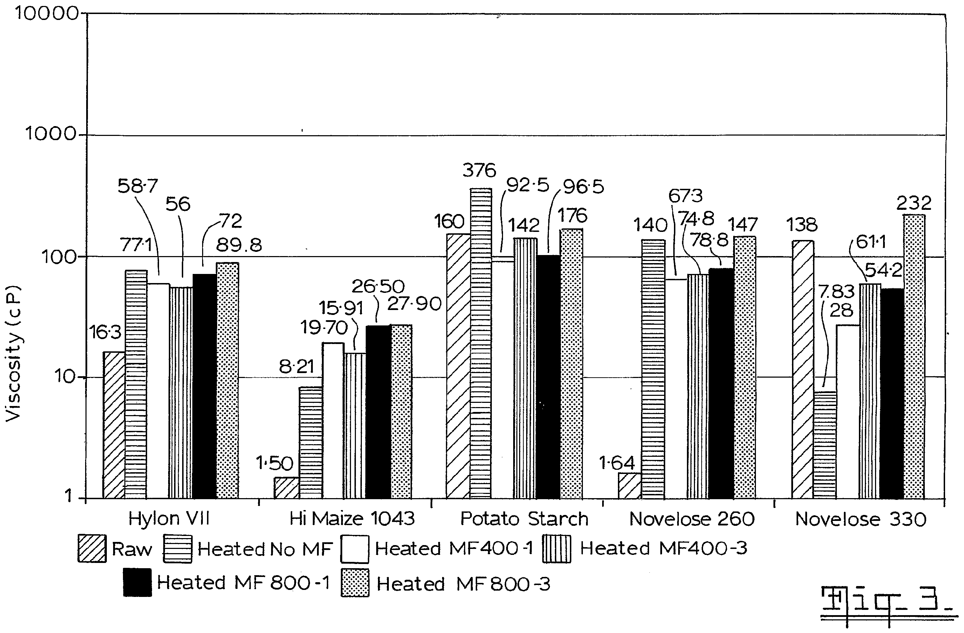

On cooling of starch suspensions from 98°C to 50°C, there was the expected increase in viscosity at 50°C (End) due to the decreased temperature of measurement. It was noted that there were significant differences in viscosity at 50°C on cooling directly after the starch treatment process (Figure 1) and viscosity at 50°C (Figure 3 - after temperature cycling) due to the 30 minute hold of the starch suspension at 98°C during the measurement of viscosity (Compare Figure 1 and 3).

The results presented indicated that the combination of heat treatment and microfluidisation effectively altered the viscosity of resistant starches both at 50°C and 98°C. A finding of practical interest was that microfluidisation significantly increases viscosity at 50°C of resistant starches examined (expect potato starch). The use of microfluidisation enables the modification of the viscosity of starch using a physical treatment. This increase in viscosity is beneficial if the starch ingredient is used for imparting texture to food products. An added advantage is that the starches can be easily processed at cooking temperatures. These changes may be used to design starches for different applications in the food industry such as low temperature thickening and high temperature thinning effects. The improved performance of the heated and microfluidised resistant starches were present even though the processed starch had significant resistant starch content remaining after the treatment process.

The viscosity development in the liquid state after the starch treatment process may be partly lost on drying if there is not sufficient control of the drying process. However, one skilled in the art of starch drying will be able to limit the loss of starch functionality to produce a dried treated starch powder.

### Resistant starch content of microfluidised starches

The resistant starch contents of the spray-dried resistant starches are given in Table 1. The results show that the treated starches (Hi-Maize 1043, Hylon VII, Novelose 260 and Novelose 330) maintained a significant amount of resistant starch. Most of these starches were starches with high amylose content. The exception was potato starch (a phosphorylated starch that contains only 20%) amylose), which lost most of its resistance.

**Table 1. Resistant Starch (RS) Content of Processed Resistant Starch after Spray-Drying**

| Name of starch | Treatment* | RS | Non-RS | Total Starch |
|---|---|---|---|---|
| | | (% w/w dry basis) | | |
| Hi-Maize 1043 | Raw (no treatment) | 54.1 | 42.5 | 96.7 |
| | Heated | 37.4 | 60.9 | 98.3 |
| | Heated MF 400-T | 37.8 | 56.9 | 94.7 |
| | Heated MF 400-3 | 34.2 | 58.4 | 92.7 |
| | Heated MF 800-1 | 34.6 | 62.8 | 97.5 |
| | Heated MF 800-3 | 33.1 | 65.8 | 99.0 |
| Hylon VII | Raw | 57.7 | 38.7 | 96.4 |
| | Heater | 32.9 | 63.9 | 96.8 |
| | Heated MF 400-1 | 32.5 | 61.2 | 93.8 |
| | Heated MF 400-3 | 31.1 | 68.6 | 99.7 |
| | Heated MF 800-1 | 30.0 | 68.4 | 98.4 |
| | Heated MF 800-3 | 30.5 | 68.9 | 99.3 |
| Novelose 260 | Raw (no treatment) | 46.1 | 52.2 | 98.3 |
| | Heated | 34.2 | 64.7 | 98.9 |
| | Heated MF 400-1 | 33.2 | 66.0 | 99.2 |
| | Heated MF 400-3 | 33.3 | 65.9 | 99.2 |
| | Heated MF 800-1 | 30.4 | 68.1 | 98.5 |
| | Heated MF 800-3 | 28.5 | 65.4 | 93.8 |
| Novelose 330 | Raw (no treatment) | 48.3 | 48.0 | 96.3 |
| | Heated | 45.3 | 49.7 | 95.0 |
| | Heated MF 400-1 | 48.9 | 43.9 | 92.8 |
| | Heated MF 400-3 | 46.8 | 45.4 | 92.2 |
| | Heated MF 800-1 | 45.9 | 45.1 | 91.0 |
| | Heated MF 800-3 | 46.3 | 49.9 | 96.1 |
| Potato | Raw (no treatment) | 78.7 | 12.9 | 91.7 |
| | Heated | 3.9 | 89.8 | 93.7 |
| | Heated MF 400-1 | 4.6 | 87.1 | 91.7 |
| | Heated MF 400-3 | 5.4 | 90.8 | 96.2 |
| | Heated MF 800-1 | 7.0 | 89.5 | 96.4 |
| | Heated MF 800-3 | 4.6 | 87.1 | 91.6 |

| | | | | |
|---|---|---|---|---|
| * Note: MF 400-1 - Microfluidised @ 400 bars and 1 pass first number is microfluidisation pressure and second number is the number of passes: Spray drying at 185°C inlet/80°C outlet | | | | |

The resistant starch content (% dry basis) of the wet heated or heated and microfluidised starch was similar after conversion of the wet treated starch to the powder by spray-drying (Table 2).

**Table 2. Comparison of the resistant starch content of wet starch and spray-dried starch**

| Treatment | Wet Sample (% w/w dry basis) | Powder* (% w/w dry basis) |
|---|---|---|
| Raw starch (no treatment) | | 58 |
| Heated Only | 33 | 33 |
| Heated MF 800-1 | 29 | 30 |
| Heated MF 800-3 | 28 | 29 |

| | | |
|---|---|---|
| * Spray-dried at 185°C inlet/80°C outlet | | |

### Particle size of microfluidised resistant starches

The particle size of heated and microfluidised starches are given in Table 3. The treatment caused a reduction in the particle size of the starch.

**Table 3. Particle Size Distribution of Spray-Dried Pre-Processed Hylon VII**

| Treatment of starch | Particle Diameter (Number) | |
|---|---|---|
| | **Mode (µm)** | **Mean (µm)** |
| Raw starch (No treatment) | 6.8 | 7.9 |
| Heated MF 400-1 | <0.75 | 4.4 |
| Heated MF 400-3 | <0.75 | 4.9 |
| Heated MF 800-1 | <0.75 | 1.4 |
| Heated MF 800-3 | <0.75 | 3.6 |

| | | |
|---|---|---|
| Spray-dried at 185°C inlet/80°C outlet | | |

### Molecular weight of microfluidised resistant starches

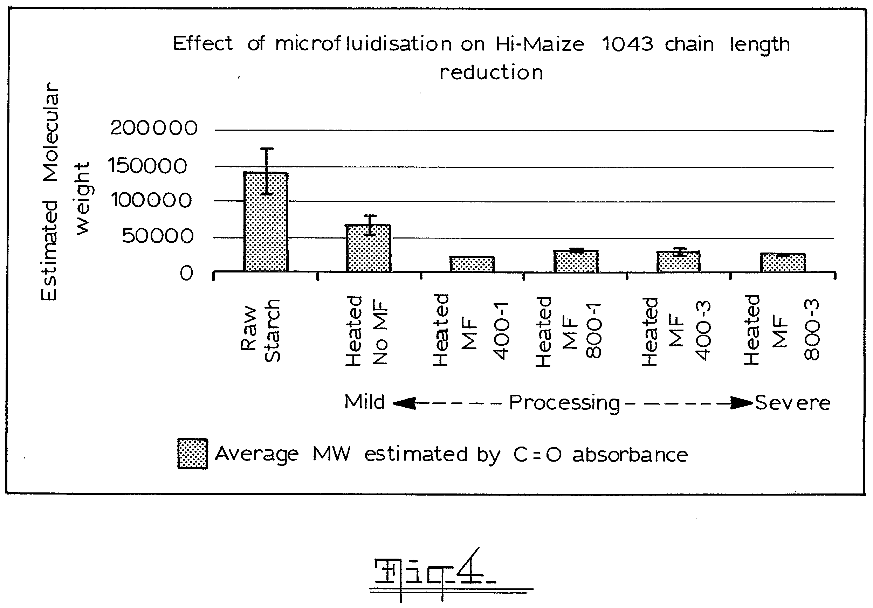

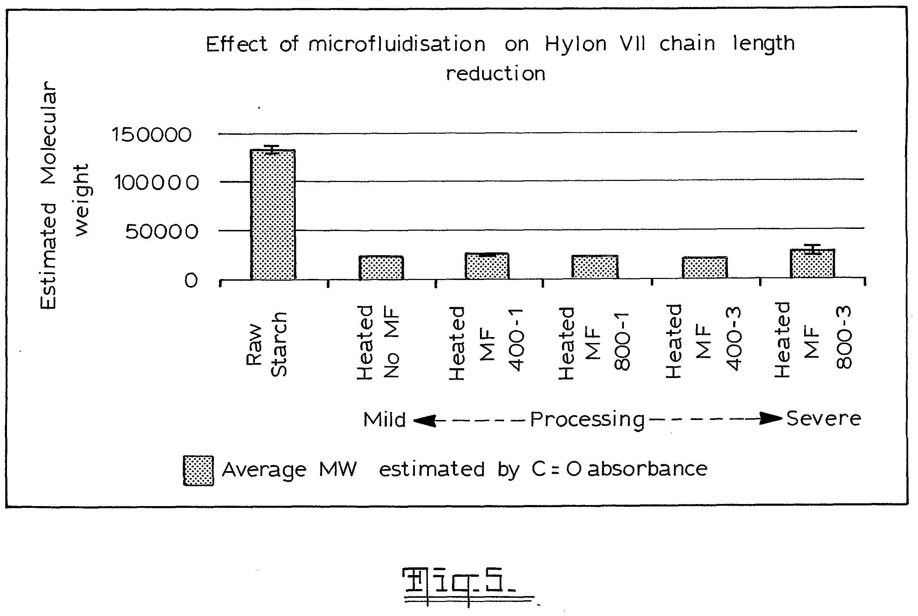

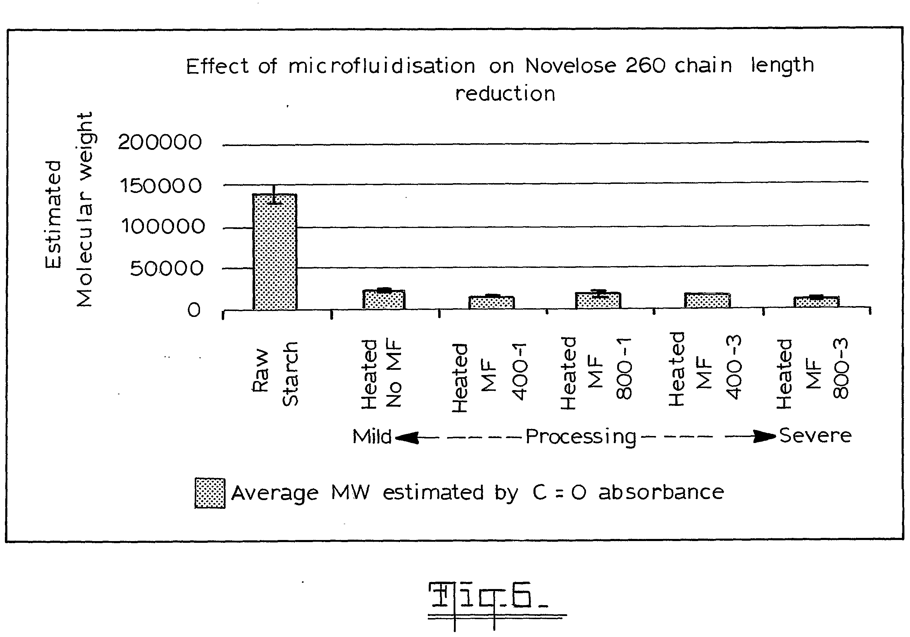

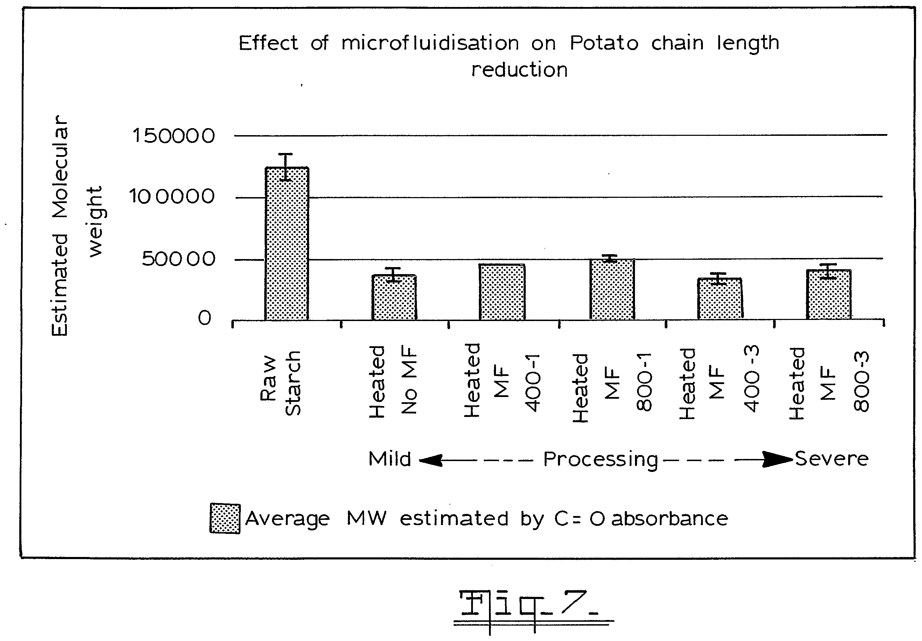

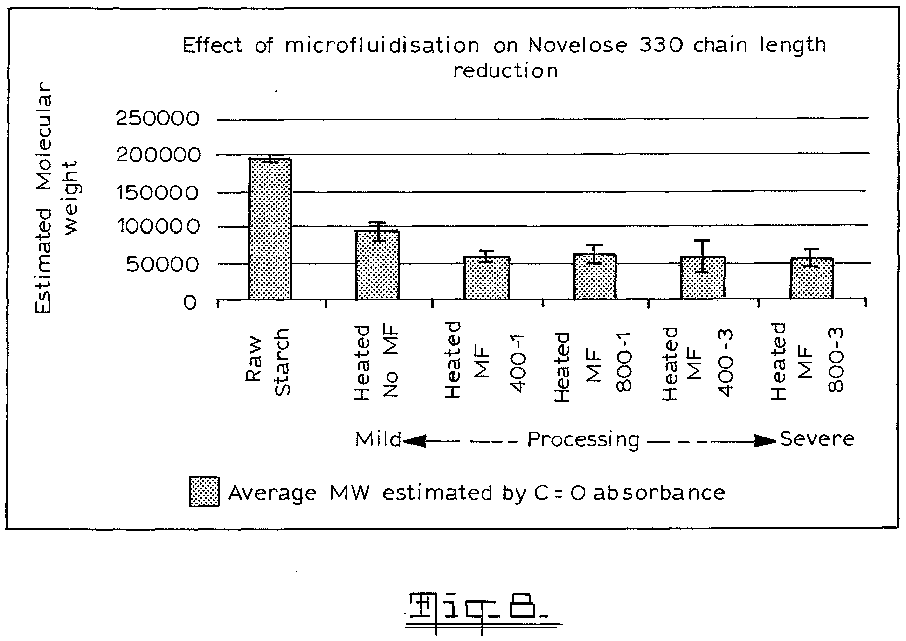

The average molecular weight of the spray-dried resistant starches is reduced by the treatment, suggesting that there was scission of bonds as a result of the process applied (Figures 4-8).

### Example 2: Characteristics of Resistant starches treated by High Pressure Processing or Ultrasonics

Selected characteristics of the processed starches are given in Table 4.

**Table 4: Characteristics of Spray-dried Resistant starches treated by High Pressure Processing or Ultrasonics**

| Characteristic | Raw Starch (No treatment) | Ultrasonicated Starch | High Pressure Processed Starch |
|---|---|---|---|
| Resistant starch content (% w/w dry basis) | 58 | 35 | 35 |
| Particle size (µm) | 6.8 (Mode) | <0.75 (Mode) | <0.75 (Mode) |
| | 7.9 (Mean) | 1.3 (Mean) | 2.9 (Mean) |

| | | | |
|---|---|---|---|
| * Spray-dried at 185°C inlet/80°C outlet | | | |

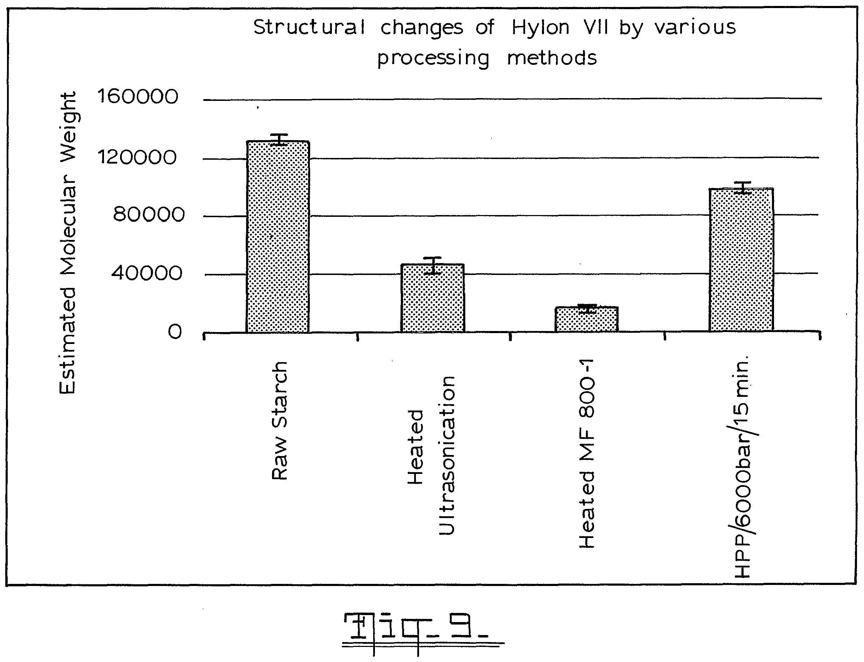

Approximately 60% of the original resistance is maintained after processing. The particle size data shows that there is a reduction in the size of the treated starches. The average molecular weight of the starch is also reduced (Figure 9).

### Example 3: Characteristics of Microfluidised Non-Resistant cereal starches

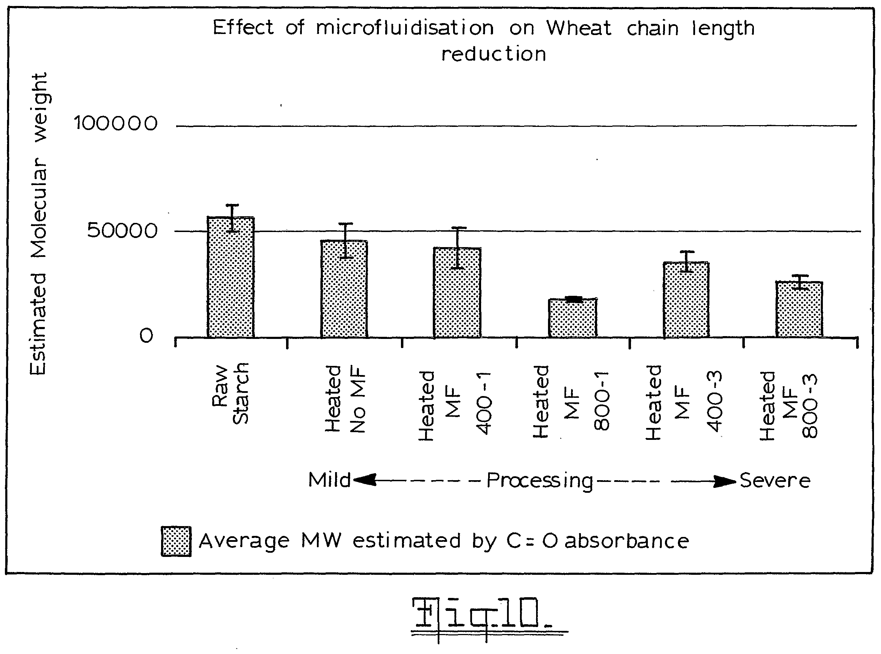

Treatment of non-resistant starches modified the properties of non-resistant starches (Table 5, Figure 10).

**Table 5: Characteristics of Microfluidised and Spray-Dried Non-Resistant cereal starches**

| Starch | Treatment | Resistant starch content (g/100g dry basis) | Particle size (Mode) (rpm) | Particle size (Mean) (rpm) |
|---|---|---|---|---|
| Corn starch | None | 0.9 | 11.0 | 8.6 |
| | Heated MF 800-1 | 6.3 | <0.75 | 1.0 |
| Waxy maize | None | 0.4 | 12.1 | 7.9 |
| | Heated MF 800-1 | 0.5 | <0.75 | 1.5 |
| Wheat starch | None | 0.3 | 3.8 | 5.6 |
| | Heated MF 800-1 | 9.6 | <0.75 | 1.0 |

| | | | | |
|---|---|---|---|---|
| * Spray-dried at 185°C inlet/80°C outlet | | | | |

The resistant starch content is increased after treatment and this was accompanied by a decease in the particle size of the particles. Figure 10 indicates that the treatment caused a scission of bonds within the wheat starch molecule.

### PERFORMANCE OF MODIFIED STARCH INGREDIENT IN PRODUCTS

To demonstrate the improved performance of the modified resistant starch ingredient, a number of product examples were formulated with the new ingredient in the wet state.

### Example 4: Performance of microfluidised resistant starch ingredient in yoghurt

The microfluidised resistant starch enables the addition of resistant starch into yoghurt. Raw and treated Hylon VII (Heated and Microfluidised 800 bar/1 pass) was used.

Skim milk powder was reconstituted to the required total solids (9 -12% w/w), heated at 85°C for 30 minutes with constant stirring at 400 rpm and then cooled to 43°C. The starches were added either before the addition of cultures or after fermentaion. Cultures (Mixture of Streptococcus Thermophilis ST2 and Lactobacillus bulgaricus LB1 in the ratio 3:2) were added and the yoghurt milk mixture was fermented at 43°C until a pH of 4.6 was reached. Yoghurts were cooled down to 4°C, stirred at 300 rpm and then stored at 4°C. For yoghurts where addition of starch was required after fermentation (AF), starch was added prior to stirring.

The properties of the yoghurts at a constant total solids is given in Table 6. The results demonstrates that addition of microfludisied starch improved the properties of yoghurt. The high viscosity and improved resistance to syneresis are desirable properties in yoghurt. The resistant starch content of the starch also contributes to the nutritional properties. Yoghurts made with the microfluidised starch ingredient had a smooth texture. This example demonstrates the use of the treated ingredient for improving water binding and building texture in yoghurt.

**Table 6. Effects of addition of raw and microfluidised Hylon VII on the properties of yoghurt**

| | Yoghurt (no starch) | Yoghurt with raw Hylon VII | | Yoghurt with microfluidised Hylon VII | |
|---|---|---|---|---|---|
| **Stage of starch addition** | Not applicable | Before Fermentation | After Fermentation | Before Fermentation | After Fermentation |
| | | | | | |
| **Formulation** | | | | | |
| Skim milk solids | 12 | 9 | 9 | 9 | 9 |
| Starch | | 3 | 3 | 3 | 3 |
| Total solids | 12 | 12 | 12 | 12 | 12 |
| | | | | | |

| **Properties** | | | | | |
|---|---|---|---|---|---|
| pH | 4.2 | 4.3 | 4.2 | 4.3 | 3.9 |
| Viscosity (P)* | 5.8 | 4.8 | 4.4 | 8.7 | 9.2 |
| Syneresis** (ml/50g) | 14.4 | 14.8 | 14.3 | 9.1 | 13.7 |

| | | | | | |
|---|---|---|---|---|---|
| *** - Viscosity at a shear rate of 46s-1; **Whey drained from yoghurt over a sieve after 4hr at 4°C** | | | | | |

### Example 5: Starch Gel Dessert containing Microfluidised Resistant Starch

The example of use of the heated and microfluidised starch (800 bar/ 3 passes) in a gel dessert indicates the ability of the modified starch ingredient to function as a gelling agent

A formulation containing heated and microfluidised Hylon VII (10% solids) and sugar 10% w/w) was mixed at 60°C and filled into a mould and stored at 4°C for 24 hr. A stand-up dessert is formed. This example demonstrates that the heated and microfluidised resistant starch may be used as an ingredient for a simple gel dessert giving it a firm gel that is stable at room temperature.

### Example 6: Ice-Cream with Microfluidised Resistant Starch

Fat substitution in ice cream is seen as a potential application where resistant starch may be added to create a fat free ice cream without detriment to the physical properties of the product. In this example, an ice cream product in which raw Hylon VII or a treated resistant starch (heated and microfluidised at 800 bar / 3 passes) is used to replace milk fat, emulsifier and stabilizer.

Ice cream mix formulations used are listed in Table 7. The mixes were pasteurized, aged at 4 °C overnight and then churned in an Ice cream maker (Sunbeam). Ice creams were hardened at -20°C for 7 days.

**Table 7. Ice cream formulations with or without treated starch**

| Formulation without Starch | | Formulation with starch | |
|---|---|---|---|
| Ingredients | % w/w | Ingredients | % w/w |
| Skim milk powder* | 11.0 | Skim milk powder* | 11.0 |
| Sucrose | 14.0 | Sucrose | 14.0 |
| Cream (35% fat) | 11.0 | Starch** | 4.2 |
| Guar gum | 0.1 | | |
| CMC | 0.1 | | |
| GMS (40%) | 0.2 | | |
| Water | 63.6 | Water | 70.8 |
| %TS in mix | 36.4 | %TS in mix | 29.2 |

| | | | |
|---|---|---|---|
| * Skim milk powder ingredient has 4% moisture; ** Microfluised starch ingredient has 10.5% total solidus; CMC-carboxymehylcellulose, GMS - glycerolmonostearate | | | |

### The physical properties of the ice-cream are given in Table 8.

**Table 8. Summary of the physical functionality results of ice cream**

| Description of Ice Cream | Viscosity (Poise) | Overrun (%) | Firmness (N) | Melt test (%) |
|---|---|---|---|---|
| Without Starch | 1.3 | 29.4% | 41 | 56.8% |
| With Raw Hylon VII | 2.4 | 80.2% | 102 | 29.5% |
| With Treated Hylon VII | 7.1 | 64.9% | 93 | 1.0% |

Treated resistant starch (heated and microfluidised) can be successfully used as fat replacement for ice cream product without any detrimental effect on texture whilst increasing overrun, and mix viscosity, firmness and slowing down melting at room temperature.

### Example 7: Low-fat spread containing microfluidised starch ingredient

A 40% fat spread with treated Hylon VII (heated and microfluidised 800 bar / 3 passes) was made. The treated starch was the sole "aqueous" component of the spread. The trial was conducted on a pilot scale Gerstenberg and Agger spreads plant (with a phase inverter).

A blend of 18.33kgs of emulsion was prepared according to the formulation detailed in Table 9.

**Table 9: Formulation of low-fat spread**

| Ingredient | Weight (kg) | Percentage addition (% w/w) |
|---|---|---|
| Hydrogenated Cottonseed oil (44°C melting point) | 2.57 | 14 |
| Canola Oil | 4.78 | 26 |
| Dimodan OT (distilled monoglyceride) | 0.02 | 0.2 |
| PGPR () | 0.02 | 0.2 |
| | | |
| Salt | 0.183 | 1 |
| Starch/ water | 10.77 | 58.6 |
| | | |
| Total | 18.33 | 100 |

As the product was produced only for feasibility purposes no colour or flavour was used in the formulation. All oil soluble ingredients were first added to the blender and the treated starch (as a 10% total solids suspension) and salt mixture was then slowly added under intense agitation.

As the emulsion was prepared (with only 40% fat), it produced a stable oil continuous emulsion that processed easily through the pilot plant. The product packed well, with normal back pressure on the plant. Microscopic examination of the final product showed that it had emulsion characteristics similar to a conventional spread, with the majority of the aqueous droplets in the 3 to 5 micron range with a few droplets up to 10 micron.

The spreadability of the final product was quite good and compared very favourably to a conventional spread. There was no evidence of water separation from the emulsion during the shearing forces produced during repeated spreading actions. The product did have an inherent flavour, possibly associated with the starch.

### Example 8: Encapsulation of water soluble bioactive

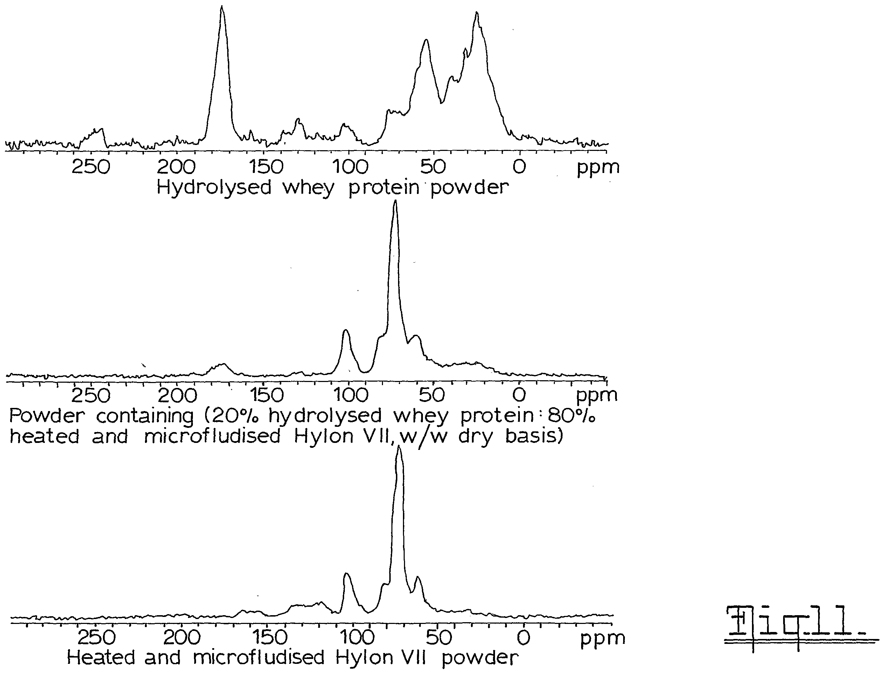

The bioactive chosen was hydrolysed whey protein. A wet formulation containing (12.2 % total solids, 2.44% hydrolysed whey protein and 9.76% heated and microfluidised Hylon VII) was prepared and dried in a lab-scale Drytec spray dryer (Inlet temperature 180°C; Outlet temperature 80°C). The solid state ¹³C CPMAS (cross-polarised magic angle spinning) NMR spectra demonstrate that the presence of the hydrolysed whey protein in the powdered sample (Figure 11)

From the above it can be seen that this invention provides a unique ingredient that has nutritional benefits and the easy processing attributes of conventional fat replacement ingredients. Those skilled in the art will realize that this invention can be implemented in a number of different ways depending on the starch raw material and the desired functional properties.

## Claims

1. A method of improving the water binding properties while retaining resistance of a high amylose starch which includes the steps of treating the high amylose starch at
a) a temperature above its gelatinization temperature; and
b) a pressure above 400 bar,
wherein the time taken to carry out the treatment is from 30 to 90 minutes; and the pressure is applied by microfluidisation.

2. A method as claimed in claim 1 in which the treatment is carried out at a temperature between the gelatinization temperature of the starch and 160°C using more than one pass through a microfluidisation chamber.

3. A method as claimed in any one of claims 1 to 2 in which the treated high amylose starch is subsequently dried.

4. A method as claimed in claim 1 wherein the treated high amylose starch is a wet food grade high amylose resistant starch with a viscosity at 50°C above 10 cPs and a content of resistant starch of above 30% by weight on a dry basis.

## Patentansprüche

1. Verfahren zur Verbesserung der Wasserbindeeigenschaften bei Beibehaltung von Resistenz einer Stärke hoher Amylose, das die Schritte der Behandlung der Stärke hoher Amylose bei
a) einer Temperatur über ihrer Verkleisterungstemperatur; und
b) einem Druck über bar, wobei zur Durchführung der Behandlung benötigte Zeit von 30 bis 90 Minuten reicht; und der Druck durch Mikrofluidisierung aufgebracht wird.

2. Verfahren wie in Anspruch 1 beansprucht, bei dem die Behandlung bei einer Temperatur zwischen der Verkleisterungstemperatur der Stärke und 160°C unter Verwendung von mehr als einem Durchgang durch eine Mikrofluidisierungskammer ausgeführt wird.

3. Verfahren wie in einem der Ansprüche 1 bis 2 beansprucht, bei dem die behandelte Stärke hoher Amylose sanschließend getrocknet wird.

4. Verfahren wie in Anspruch 1 beansprucht, wobei die behandelte Stärke hoher Amylose, eine Stärke des Nassnahrungsgrads hoher Amylose-Resistenz mit einer Viskosität bei 50°C über 10 cPs und einem Gehalt resistenter Stärke von über 30 Gew.-% auf einer Trockenbasis ist.

## Revendications

1. Procédé pour améliorer les propriétés liantes de l'eau tout en maintenant la résistance d'un amidon à forte teneur en amylose qui comprend les étapes de traitement de l'amidon à forte teneur en amylose
a) à une température supérieure à sa température de gélatinisation ; et
b) à une pression supérieure à 400 bars,
dans lequel le délai d'exécution du traitement est de 30 à 90 minutes ; et la pression est appliquée par microfluidisation.

2. Procédé tel que revendiqué dans la revendication 1 dans lequel le traitement est exécuté à une température comprise entre la température de gélatinisation de l'amidon et 160°C en effectuant plus d'un passage à travers une chambre de microfluidisation.

3. Procédé tel que revendiqué dans l'une quelconque des revendications 1 à 2 dans lequel l'amidon à forte teneur en amylose traité est ensuite séché.

4. Procédé tel que revendiqué dans la revendication 1 dans lequel l'amidon à forte teneur en amylose traité est un amidon résistant prégélatinisé à forte teneur en amylose de qualité alimentaire d'une viscosité à 50°C supérieure à 10 cPs et la teneur en amidon résistant est supérieure à 30 % en poids calculé sur une base sèche.
